# EUROPEAN PATENT SPECIFICATION

(11) **EP 3 960 902 B1**
(45) Date of publication and mention of the grant of the patent: **04.09.2024**
(21) Application number: 20795962.8
(22) Date of filing: 22.04.2020
(51) Int. Cl.: H01M 8/023, H01M 8/0236, H01M 8/12, H01M 8/1213, H01M 8/1226, H01M 8/2475, C25B 1/042, C25B 9/60, C25B 9/75, C25B 9/77

(54) **CELL, CELL STACK DEVICE, MODULE, AND MODULE ACCOMMODATION DEVICE**
ZELLE, ZELLENSTAPELVORRICHTUNG, MODUL UND MODULAUFNAHMEVORRICHTUNG
CELLULE, DISPOSITIF D'EMPILEMENT DE CELLULES ET DISPOSITIF DE RÉCEPTION DE MODULE

(30) Priority: 24.04.2019 JP 2019083011
(43) Date of publication of application: 02.03.2022
(73) Proprietor: Kyocera Corporation, Kyoto-shi, Kyoto 612-8501 (JP)
(72) Inventor: SENO, Hiroaki, Kyoto-shi, Kyoto 612-8501 (JP); FUJIMOTO, Tetsuro, Kyoto-shi, Kyoto 612-8501 (JP)
(74) Representative: Viering, Jentschura & Partner mbB Patent- und Rechtsanwälte
(86) International application number: PCT/JP2020/017331
(87) International publication number: WO 2020/218334

(56) References cited:
- DE-A1- 10 219 096
- JP-A- 2000 058 089
- JP-A- 2006 236 989
- JP-A- 2009 277 503
- JP-A- 2012 043 808
- JP-A- 2012 133 961
- JP-A- 2013 157 234
- JP-A- 2017 152 098
- US-A1- 2002 094 465
- US-A1- 2008 057 363
- US-A1- 2008 160 352
- US-A1- 2011 305 972
- US-A1- 2012 189 939

## Description

### Technical Field

The present disclosure relates to a cell, a cell stack device, a module, and a module housing device.

### Background Art

In recent years, in fuel cell devices used as next-generation energy sources, for example, a cell in which a fuel electrode layer, a solid electrolyte layer, and an air electrode layer are layered on a porous support body is used. A ceramic material, a metal material, or the like is used for the support body. For the metal support body, a metal material such as ferritic stainless steel having high thermal resistance and corrosion resistance is used, and a metal sintered body obtained by sintering a powder of the metal material or a metal plate having through holes is used. For example, Patent Document 1 discloses a solid oxide fuel cell (SOFC) using a porous metal containing Fe and Cr as a support body.

### Citation List

### Patent Document

Patent Document 1: JP 2016-115506 A

DE 102 19 096 A1 discloses a high temperature fuel cell which comprises a ceramic electrolyte and electrodes arranged as functional layers on a metallic support having perforations and/or pores with a diameter of more than 100 µm.

US 2008/160352 A1 discloses a high-temperature fuel cell comprising: a metallic support structure for solid oxide functional layers, said metallic support structure having through openings for a gas; a porous intermediate structure made of nickel or a nickel alloy provided on the support structure; and a functional layer provided on the intermediate structure.

US 2008/057363 A1 discloses a solid oxide fuel cell comprising: a metal bearing structure for a cathode-electrolyte-anode unit, said metal bearing structure having passage orifices for a gas and being configured to operate as an electric resistance heating element for adjusting the fuel cell temperature, said metal bearing structure having a protective oxide layer which is electrically insulating for the metal bearing structure; a bipolar plate; and an electrically conductive material in at least some of the passage orifices of the metal bearing structure which provides an electric connection with the bipolar plate, wherein an electric current may be guided through the metal bearing structure and wherein the cathode-electrolyte-anode unit is configured so that a gas may pass through the passage orifices of the metal bearing structure.

US 2002/094465 A1 discloses a high-temperature fuel cell, comprising: an electrolyte/electrode unit having an anode; an interconnector having a fuel gas side; at least two metallic functional layers applied one above another on said fuel-gas side of said interconnector, said two metallic functional layers including a first functional layer containing nickel and a second functional layer containing copper disposed below said first functional layer; and an electrical conductor connecting said anode to said first functional layer.

JP 2009 277503 A discloses a fuel cell which includes gas diffusion layers provided along a membrane-electrode assembly, the metal porous bodies each functioning as a gas flow path and a collector and having a surface coated with metal, and conductive sheet members each provided between the gas diffusion layer and the meal porous body, having higher flexibility than the metal porous body and higher density than the gas diffusion layer, and having a through-hole passing therethrough in the thickness direction.

JP 2013 157234 A discloses a solid oxide fuel cell which includes a metal collector. The metal collector is electrically connected to a connector plate. Also, the metal collector is arranged between the connector plate and an electrode layer, and is allowed to have contact with a surface of the electrode layer. The metal collector has metal foil that is composed deformably so as to be swollen toward the electrode layer by pressure of gas for power generation in an internal space. Also, the metal foil has through-holes that allow the gas for power generation in the internal space to pass therethrough to a side of the electrode layer.

### Summary

The present invention provides a cell according to claim 1, a cell stack device according to claim 10, a module according to claim 11, and a module housing device according to claim 12. Further embodiments of the present invention are disclosed in the dependent claims.

### Brief Description of Drawings

FIG. 1 is a cross-sectional view illustrating a cross section of one example of a cell.
FIG. 2 is a cross-sectional view illustrating a cross section of one example of the cell.
FIG. 3 is an enlarged cross-sectional view illustrating a portion surrounded by a dashed line in the one example in FIG. 1.
FIG. 4 is an enlarged cross-sectional view illustrating the portion surrounded by the dashed line in the one example in FIG. 1.
FIG. 5 is an enlarged cross-sectional view illustrating the portion surrounded by the dashed line in the one example in FIG. 1.
FIG. 6 is an enlarged cross-sectional view illustrating the portion surrounded by the dashed line in the one example in FIG. 1.
FIG. 7 is an enlarged cross-sectional view illustrating the portion surrounded by the dashed line in the one example in FIG. 1.
FIG. 8 is a horizontal cross-sectional view illustrating one example of the cell and a plan view of a first surface of a metal plate.
FIG. 9 is a horizontal cross-sectional view illustrating one example of the cell and a plan view of the first surface of the metal plate.
FIG. 10 is a horizontal cross-sectional view illustrating one example of the cell and a plan view of the first surface of the metal plate.
FIG. 11 is a side view schematically illustrating one example of a cell stack device.
FIG. 12 is an enlarged horizontal cross-sectional view of a portion of the cell stack device illustrated in FIG. 11 surrounded by a dashed line.
FIG. 13 is an exterior perspective view illustrating one example of a module.
FIG. 14 is a perspective view illustrating one example of a module housing device.

### Description of Embodiments

### Cell

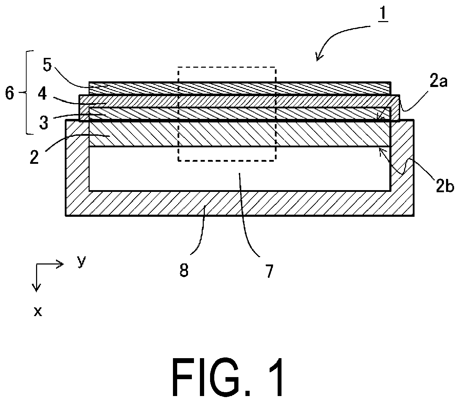

FIG. 1 illustrates a cross section of one example of a cell with a metal support body. A cell 1 includes a metal support body and an element portion 6, the metal support body having a metal plate 2 having a pair of surfaces, which are a first surface 2a and a second surface 2b that face each other, and a flow path member 8. The element portion 6 is disposed on the first surface of the metal plate 2, and includes a first electrode layer 3, a solid electrolyte layer 4, and a second electrode layer 5. The first electrode layer 3 is disposed on the first surface of the metal plate 2, the solid electrolyte layer 4 is disposed on the first electrode layer 3, and the second electrode layer 5 is disposed on the solid electrolyte layer 4.

The metal support body has a gas-flow passage 7 formed by the second surface 2b and the flow path member 8. The second surface 2b is on the opposite side to the first surface 2a of the metal plate 2 on which the element portion 6 is disposed.

The metal plate 2 has gas permeability that allows a gas flowing through the gas-flow passage 7 to permeate to the first electrode layer 3. The flow path member 8 has a gas blocking property that prevents gas from flowing between the gas-flow passage 7 and the outside of the cell 1, that is, prevents mixing of fuel gas and oxygen-containing gas such as air. In the example illustrated in FIG. 1, the gas-flow passage 7 is formed by the metal plate 2 and the flow path member 8 having a U-shaped cross-section.

Hereinafter, the same members will be designated by the same reference numerals in other figures. Note that, in each figure, each layer is enlarged in the thickness direction for ease of explanation, and the actual thickness of each layer is very thin relative to the size of the cell 1. Further, in order to clarify the arrangement of each of the members constituting the cell 1, coordinate axes of xyz are set.

Hereinafter, unless otherwise specified, the first electrode layer 3 located between the metal plate 2 and the solid electrolyte layer 4 will be referred to as a fuel electrode, and the second electrode layer 5 located on the solid electrolyte layer 4 will be referred to as an air electrode. Fuel gas such as hydrogen-containing gas is supplied to the gas-flow passage 7, that is, the second surface 2b side, which is the lower side of the metal plate 2 illustrated in FIG. 1, and oxygen-containing gas such as air is supplied to the upper side of the second electrode layer 5 which is the air electrode. Note that the first electrode layer 3 may be the air electrode and the second electrode layer 5 may be the fuel electrode. In this case, the oxygen-containing gas such as air is supplied to the lower side of the metal plate 2 of the cell 1 illustrated in FIG. 1, and the fuel gas such as the hydrogen-containing gas is supplied to the upper side of the second electrode layer 5 which is the fuel electrode.

The cell 1 may be, for example, a solid oxide cell 1. The solid oxide cell 1 has high power generation efficiency as a fuel cell, whereby the entire power generation device can be reduced in size. In addition, the solid oxide cell 1 can perform load following operation, and can follow the fluctuating load required for, for example, a household fuel cell.

As the fuel electrode, a material commonly known as a fuel electrode may be used. The fuel electrode may contain a porous conductive ceramic such as stabilized zirconia and Ni and/or NiO. Stabilized zirconia is, for example, ZrO₂ in which magnesium (Mg), calcium (Ca), or a rare earth element is present in solid solution, and also includes partially stabilized zirconia. The rare earth element in the present disclosure includes yttrium (Y).

The solid electrolyte layer 4 is an electrolyte that transfers electric charges between the first electrode layer 3 and the second electrode layer 5. The solid electrolyte layer 4 has a gas blocking property so that the fuel gas and the oxygen-containing gas such as air do not mix with each other. The material of the solid electrolyte layer 4 is not limited as long as the material is an electrolyte having a gas blocking property, and may be ZrO₂ in which, for example, 3 mol% to 15 mol% of a rare earth element oxide is present in solid solution. The solid electrolyte layer 4 may be dense or may have pores as long as the solid electrolyte layer 4 has a gas blocking property.

As the air electrode, a material commonly used as an air electrode may be used. The air electrode may be, for example, a so-called ABO₃ perovskite oxide conductive ceramic. The air electrode has gas permeability. The open porosity of the air electrode may be 20% or more, in particular, in a range of from 30% to 50%.

The metal plate 2 has electrical conductivity. Since the metal plate 2 has electrical conductivity, electricity generated in the element portion 6 can be collected. The conductivity of the metal plate 2 may be, for example, 3.0 S/m or more, particularly 4.4 S/m or more.

Further, the metal plate 2 is configured to allow gas to flow between the first surface 2a and the second surface 2b. In other words, the metal plate 2 has gas permeability between the first surface 2a and the second surface 2b. Since the metal plate 2 has gas permeability, the fuel gas supplied to the gas-flow passage 7 can reach the first electrode layer 3 which is the fuel electrode.

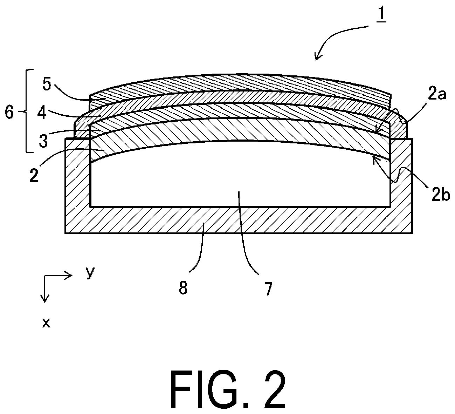

As illustrated in FIG. 1, the shape of the metal plate 2 may be a flat plate having the first surface 2a and the second surface 2b, which are a pair of flat surfaces facing each other. As illustrated in FIG. 2, the shape of the metal plate 2 may be a curved plate having the first surface 2a and the second surface 2b, which are a pair of curved surfaces facing each other. The thickness of the metal plate 2 may be, for example, 100 µm or more and 1 mm or less.

The material of the metal plate 2 may be, for example, a conductive material such as a heat-resistant alloy. The metal plate 2 may contain Cr, and may contain, for example, from 4 atomic% to 30 atomic% chromium (Cr) with respect to the entire alloy. The Cr-containing alloy may be a nickel-chromium-based alloy, an iron-chromium-based alloy, or austenite-based, ferrite-based, or austenite-ferrite-based stainless steel. Additionally, the metal plate 2 may contain manganese (Mn) or aluminum (Al) as an element other than Cr.

The element portion 6 is manufactured by simultaneously sintering a laminate in which two or more layers of the fuel electrode layer, the solid electrolyte layer 4, and the air electrode layer are layered. The metal plate 2 is often bonded to the sintered laminate with an adhesive or the like. The solid electrolyte layer 4 is dense and does not have gas permeability; however, the first electrode layer 3 and the second electrode layer 5, that is, the fuel electrode and the air electrode are porous and permeable to gas. When the dense solid electrolyte layer 4 is fired simultaneously with the porous first electrode layer 3 or the second electrode layer 5, the sintered laminate often has warpage or deformation because the contraction factor at the time of firing differs for each layer. When the metal plate 2 and the laminate having warpage or deformation are bonded, peeling or cracking is likely to occur in the laminate. The solid electrolyte layer 4 may cover all the surfaces of the first electrode layer 3 that are not in contact with the metal plate 2. The solid electrolyte layer 4 and the flow path member 8 may form a tubular body. Further, a surface of the first electrode layer 3 that is not in contact with the metal plate 2 or the solid electrolyte layer 4 may be covered with another member having no gas permeability.

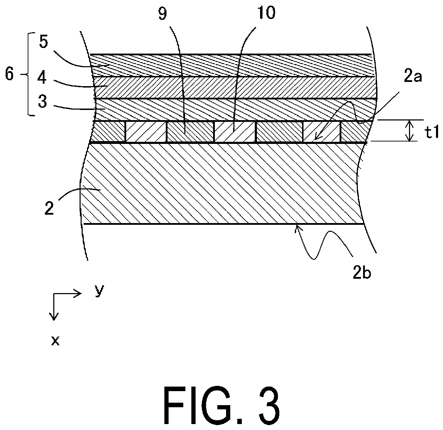

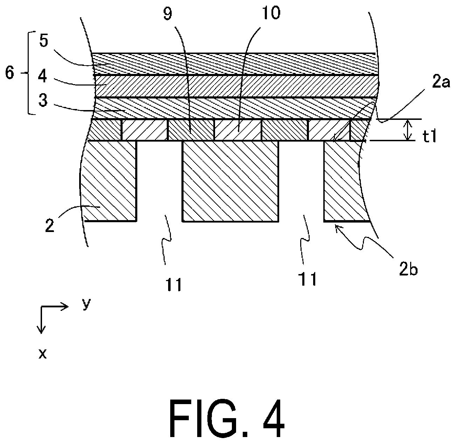

FIGS. 3 and 4 are enlarged cross-sectional views of a portion surrounded by a dashed line in FIG. 1. As illustrated in FIGS. 3 and 4, the cell 1 of the present disclosure includes an intermediate layer 9 having a plurality of first through holes passing through the intermediate layer 9 in a thickness direction between the first surface 2a of the metal plate 2 and the first electrode layer 3. The material of the intermediate layer 9 has a contraction factor similar to that of the material of the solid electrolyte layer 4 at the time of firing. The laminate obtained by sandwiching the material of the first electrode layer 3 between the material of the solid electrolyte layer 4 and the material of the intermediate layer 9, and then firing the materials, has little warpage or deformation. In such a laminate, since the porous first electrode layer 3 is sandwiched between the solid electrolyte layer 4 and the intermediate layer 9 whose contraction factors at the time of firing are similar to each other, warpage or deformation is unlikely to occur. In the cell 1 in which the first surface 2a of the metal plate 2 and the intermediate layer 9 of the laminate having little warpage or deformation are bonded, peeling or cracking is unlikely to occur in the laminate. An average thickness t1 of the intermediate layer 9 may be, for example, 0.5 µm or more and 20 µm or less.

Each of the first through holes has a diameter of one half or more of the thickness of the intermediate layer 9. That is, the first through hole may have opening portions with a diameter of one half or more of the thickness of the intermediate layer 9 on two facing surfaces of the intermediate layer 9, that is, a surface facing the first electrode layer 3 and a surface facing the metal plate 2. The first through hole may have a diameter of one half or more of the thickness of the intermediate layer 9 in a cross section perpendicular to the thickness direction of the intermediate layer 9. Note that the diameter of the first through hole at the opening portions or in the cross section is the diameter when the area of the opening portion or cross section is converted into a circle. The first through hole may have, for example, a diameter of 0.01 mm or more and 1.0 mm or less in the cross section perpendicular to the thickness direction of the intermediate layer 9. The opening portions and the cross section perpendicular to the thickness direction of the intermediate layer 9 of the first through hole may have a circular shape, an elliptical shape, a polygonal shape such as a triangular shape or a quadrangular shape, or an irregular shape. The distance between adjacent ones of the first through holes may be, for example, 0.7 to 1.0 times the diameter of each of the first through holes. By having the first through holes having such a diameter at such distances, it is possible to form a laminate with little warpage or deformation, and it is possible to obtain high power generation efficiency by allowing gas to flow to the first electrode layer 3.

The intermediate layer 9 has open pores or closed pores in addition to the first through holes, or may have a dense portion other than the first through holes. Hereinafter, the porosity of the intermediate layer 9 is the porosity of the portion other than the first through holes in the intermediate layer 9, and the denseness of the intermediate layer 9 is the denseness of the portion other than the first through holes in the intermediate layer 9. The intermediate layer 9 has a porosity smaller than that of the first electrode layer 3. For example, the open porosity of the fuel electrode is 10% or more, in particular, from 20% to 50%, and the open porosity of the air electrode is 20% or more, in particular, from 30% to 50%. When the porosity of the intermediate layer 9 is smaller than that of the first electrode layer 3, that is, the fuel electrode or the air electrode, that is, the intermediate layer 9 has an open porosity of less than 10%, the warpage or deformation of the laminate of the intermediate layer 9, the first electrode layer 3, and the solid electrolyte layer 4 becomes small. The open porosity of the intermediate layer 9 may be, for example, 10% or less. The intermediate layer 9 need not have open pores. The intermediate layer 9 may have a porosity similar to that of the solid electrolyte layer 4, or the intermediate layer 9 may be dense.

The intermediate layer 9 has the first through holes, and even when the intermediate layer 9 is dense, the gas can be made to flow to the first electrode layer 3 through the first through holes.

The material of the intermediate layer 9 may be a material having a lower contraction factor at the time of firing than the material of the first electrode layer 3. Examples of the material of the intermediate layer 9 include yttria-stabilized zirconia. The material of the intermediate layer 9 may be a ceramic material containing stabilized zirconia and Ni and/or NiO with a smaller open porosity than the fuel electrode. The material of the intermediate layer 9 may be a lanthanum chromite-based perovskite oxide (LaCrO₃-based oxide) or a lanthanum strontium titanium-based perovskite oxide (LaSrTiO₃-based oxide). The intermediate layer 9 may be electrically insulating or electrically conductive.

The material of the intermediate layer 9 may be a material similar to that of the solid electrolyte layer 4, for example, ZrO₂ with 3 mol% to 15 mol% of a rare earth element oxide in solid solution. For example, when the material of the intermediate layer 9 is the same as the material of the solid electrolyte layer 4, that is, the main component of the intermediate layer 9 is the same as the main component of the solid electrolyte layer 4, the contraction factors of the intermediate layer 9 and the solid electrolyte layer 4 at the time of firing become substantially the same, and the warpage or deformation of the laminate becomes smaller.

A conductive member 10 may be disposed in the first through holes in the intermediate layer 9. The conductive member 10 electrically connects the metal plate 2 and the first electrode layer 3. The conductive member 10 may be an electrically conductive adhesive that bonds the metal plate 2 and the laminate described above. The conductive member 10 disposed in the first through holes in the intermediate layer 9 may be porous. When the intermediate layer 9 is dense, gas can be made to flow between the metal plate 2 and the first electrode layer 3 through the porous conductive member 10. The conductive member 10 may have, for example, an open porosity of 30% or more, in particular, in a range of from 35% to 50%.

The metal plate 2 may be a flat plate-shaped porous body having an open porosity of, for example, 30% or more, particularly in a range of from 35% to 50%. Further, as illustrated in FIG. 4, the metal plate 2 may be a dense plate having a plurality of second through holes 11 passing through the metal plate 2 in the thickness direction. Each of the second through holes 11 may have, for example, a diameter of 0.01 mm or more and 1.0 mm or less in a cross section perpendicular to the thickness direction of the metal plate 2. When the metal plate 2 has such an open porosity or the second through holes 11, the fuel gas supplied to the gas-flow passage 7 can reach the first electrode layer 3 which is the fuel electrode.

The dense metal plate 2 has a smaller surface area and higher corrosion resistance than the porous metal plate 2. Additionally, since the surface area of the dense metal plate 2 is small, an oxide film formed on the surface, that is, the content of the oxide is small. Therefore, the dense metal plate 2 has higher electrical conductivity.

When the metal plate 2 has the second through holes 11, the second through holes 11 may pass through the conductive member 10 in the thickness direction, or need not pass through the conductive member 10 as illustrated in FIG. 4.

The conductive member 10 may contain conductive particles and inorganic oxides. The conductive particles may be, for example, metal or alloy particles, conductive oxide particles, or the like. The conductive particles may contain metals such as Ni, Cu, Co, Fe, and Ti or alloys thereof, or may contain oxides or composite oxides containing Ni, Fe, Mn, Co, Zn, Ti, In, Sn, and the like. Metals such as Ni, Cu, Co, Fe, and Ti or alloys thereof, and oxides or composite oxides containing Ni, Fe, Mn, Co, Zn, Ti, In, Sn, and the like have a high level of conductivity. Further, the conductive particles may contain a lanthanum chromite-based perovskite oxide (LaCrO₃-based oxide) or a lanthanum strontium titanium-based perovskite oxide (LaSrTiO₃-based oxide). These perovskite oxides have electrical conductivity, and are neither reduced nor oxidized even when the perovskite oxides come into contact with a fuel gas such as a hydrogen-containing gas and an oxygen-containing gas such as air. These metals or alloys and oxides have high electrical conductivity, so that the electricity generated in the element portion 6 can be easily collected by the metal plate 2. In particular, the metal Ni has high electrical conductivity, and can maintain the electrical conductivity even in a high temperature reaction atmosphere. Further, Ni is contained in the first electrode layer 3, which is the fuel electrode, and the joining properties between the conductive member 10 and the first electrode layer 3 can be enhanced.

The conductive member 10 may contain inorganic oxides. Examples of the inorganic oxides contained in the conductive member 10 include oxides of Ti, Zr, Al, Si, Mg, Ca, Sr, Ba, or the like, and rare earth oxides such as oxides of Y, Yb, Ce, and Gd. The inorganic oxide contained in the conductive member 10 may be, for example, stabilized zirconia, a rare earth oxide, an ABO₃ perovskite oxide, or a titanium oxide. Note that an example of the rare earth oxide is yttrium oxide (Y₂O₃).

When the first electrode layer 3 is the fuel electrode, the conductive member 10 may contain stabilized zirconia or a rare earth oxide contained in the fuel electrode. When the first electrode layer 3 is the air electrode, the conductive member 10 may contain an electrically conductive ABO₃ perovskite oxide contained in the air electrode. Since the conductive member 10 contains the same inorganic oxide as the inorganic oxide contained in the first electrode layer 3, the adhesive strength between the first electrode layer 3 and the metal plate 2 can be increased.

The conductive member 10 may contain at least one kind of inorganic oxide from among Ti, Al, and Si. When the conductive member 10 includes inorganic oxides of Ti, Al, and Si, the components of the conductive particles contained in the conductive member 10 are likely to dissolve or diffuse in the first surface 2a of the metal plate 2, and the electric resistance at the interface between the metal plate 2 and the conductive member 10 can be made smaller.

When the conductive member 10 contains the conductive particles and the inorganic oxide, with respect to the total amount of the elements contained in the conductive member 10 in terms of an oxide, the ratio of the conductive particles may be, for example, 40 mol% or more and 80 mol% or less, and the ratio of the inorganic oxide may be, for example, more than 20 mol% and less than 60 mol%.

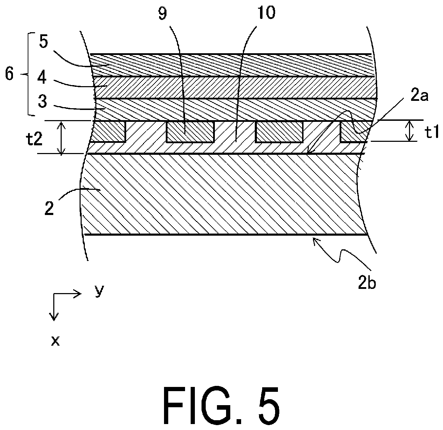

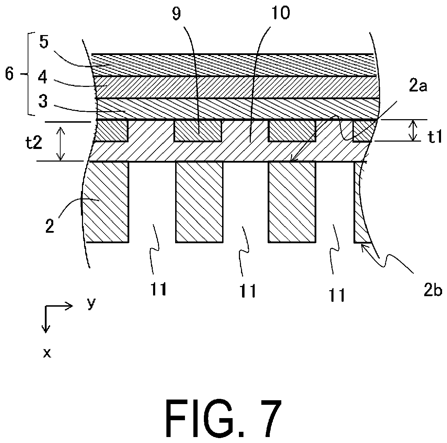

The conductive member 10 may be disposed not only in the first through holes, but also between the metal plate 2 and the intermediate layer 9 as illustrated in FIGS. 5 to 7. When the conductive member 10 is disposed between the metal plate 2 and the intermediate layer 9, the adhesive strength between the first electrode layer 3 and the metal plate 2 can be made larger. The average thickness of the conductive member 10 may be larger than the average thickness of the intermediate layer 9. An average thickness t2 of the conductive member 10 may be, for example, 10 µm or more and 200 µm or less.

As illustrated in FIGS. 4, 6, and 7, when the metal plate 2 has the second through holes 11, the conductive member 10 may be filled in part of the second through holes 11. That is, the thickness of the conductive member 10 located above the second through holes 11 illustrated in FIG. 4 and the like may be larger than the t2. Further, the thickness of the conductive member 10 located above the second through holes 11 illustrated in FIG. 4 and the like may be smaller than t2.

When the metal plate 2 has the second through holes 11, at least some of the second through holes 11 may overlap with the first through holes in a plan view in the thickness direction. When at least some of the second through holes 11 overlap with the first through holes, the gas easily reaches the first electrode layer 3 through the second through holes 11 and the first through holes.

When the metal plate 2 has the second through holes 11, the second through holes 11 need not overlap with the first through holes in a plan view in the thickness direction. When the second through holes 11 do not overlap with the first through holes, the conductive member 10 located in the first through holes connects the first electrode layer 3 and the metal plate 2 at the shortest distance, and the electricity generated in the element portion 6 can be easily collected by the metal plate 2.

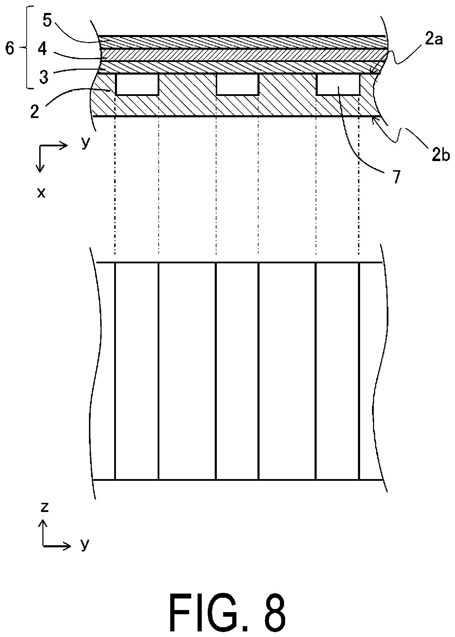

The metal plate 2 may have recessed portions or projecting portions on at least one of the first surface 2a and the second surface 2b. FIG. 8 illustrates one example of the cell 1 provided with the metal plate 2 having recessed portions on the first surface 2a. A figure illustrated on the top side of FIG. 8 is a horizontal cross-sectional view of the cell 1, and a figure illustrated on the bottom side of FIG. 8 is a plan view of the first surface 2a of the metal plate 2. As illustrated in FIG. 8, when the metal plate 2 has the recessed portions on the first surface 2a, the recessed portions need not be in contact with the first electrode layer 3. That is, gaps may be provided between the recessed portions of the first surface 2a of the metal plate 2 and the first electrode layer 3. In this case, the gaps between the recessed portions of the first surface 2a and the first electrode layer 3 may be used as the gas-flow passages 7. In the cell 1 illustrated in FIG. 8, the metal plate 2 also serves as the flow path member 8, so that the metal plate 2 need not have gas permeability between the first surface 2a and the second surface 2b.

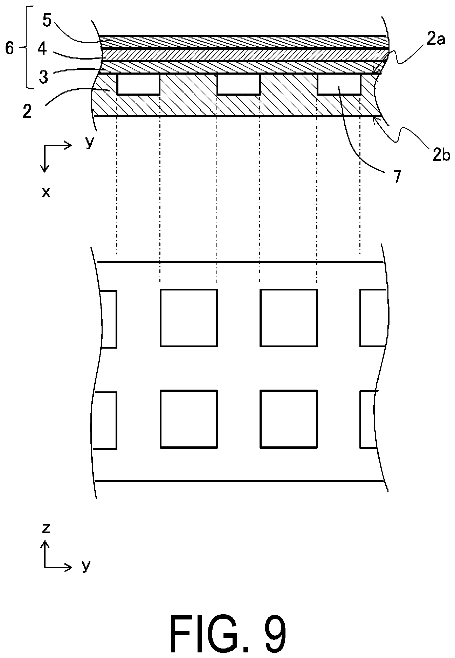

FIG. 9 illustrates one example of the cell 1 provided with the metal plate 2 having the projecting portions on the first surface 2a. A figure illustrated on the top side of FIG. 9 is a horizontal cross-sectional view of the cell 1, and a figure illustrated on the bottom side of FIG. 9 is a plan view of the first surface 2a of the metal plate 2. As illustrated in FIG. 9, when the metal plate 2 has projecting portions on the first surface 2a, only the projecting portions need be in contact with the first electrode layer 3. The cell 1 such as that described above has gaps between portions other than the projecting portions of the first surface 2a of the metal plate 2 and the first electrode layer 3, and these gaps may be used as the gas-flow passages 7. In the cell 1 illustrated in FIG. 9, the metal plate 2 also serves as the flow path member 8, so that the metal plate 2 need not have gas permeability between the first surface 2a and the second surface 2b.

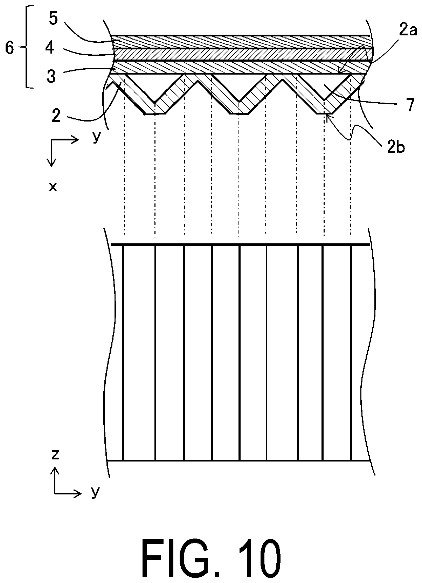

As illustrated in FIG. 10, the metal plate 2 may have recessed portions and projecting portions on both the first surface 2a and the second surface 2b. A figure illustrated on the top side of FIG. 10 is a horizontal cross-sectional view of the cell 1, and a figure illustrated on the bottom side of FIG. 10 is a plan view of the first surface 2a of the metal plate 2. As illustrated in FIG. 10, the projecting portions of the first surface 2a of the metal plate 2 may be in contact with the first electrode layer 3. The cell 1 such as that described above has gaps between the recessed portions of the first surface 2a of the metal plate 2 and the first electrode layer 3, and these gaps may be used as the gas-flow passages 7. In the cell 1 illustrated in FIG. 10, the metal plate 2 also serves as the flow path member 8, so that the metal plate 2 need not have gas permeability between the first surface 2a and the second surface 2b.

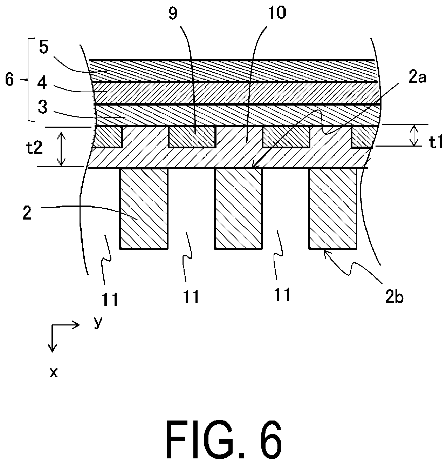

The cell 1 illustrated in FIGS. 8 to 10 also includes the above-mentioned intermediate layer 9 and the conductive member 10 between the first surface 2a and the first electrode layer 3. The gaps between the metal plate 2 and the first electrode layer 3 of the cell 1 illustrated in FIGS. 8 to 10 may be regarded as equivalent to the second through holes 11 illustrated in FIGS. 4 and 6. That is, the arrangement of the second through holes 11 in FIGS. 4 and 6 may be applied to the arrangement of the gaps between the metal plate 2 and the first electrode layer 3 in FIGS. 8 to 10.

### Evaluation Method

The presence or absence of the intermediate layer 9 and the porosity thereof and the presence or absence of the conductive member 10 and the porosity thereof can be confirmed, for example, by observing the cross section of the cell 1 with a scanning electron microscope (SEM), a scanning transmission electron microscope (STEM), a transmission electron microscope (TEM), or the like. The elements contained in the intermediate layer 9 and the conductive member 10 and the content ratios thereof can be analyzed with, for example, wavelength dispersive X-ray spectroscopy (WDS), energy dispersive X-ray spectroscopy (EDS), or an electron probe microanalyzer (EPMA).

### Method of Manufacturing Cell

A method of manufacturing the cell 1 provided with the intermediate layer 9 and the conductive member 10 when the first electrode layer 3 is used as the fuel electrode will be described. As the metal plate 2, a base member such as stainless steel is prepared. The base member may be an alloy plate or an alloy foil. When the metal plate 2 has gas permeability, the base member may be an alloy plate or an alloy foil having the second through holes 11, or may be a porous sintered body made of a metal powder.

Further, a laminate is prepared in which the fuel electrode containing Ni and/or NiO and stabilized zirconia is sandwiched between stabilized zirconia to be the solid electrolyte layer 4 and a material to be the intermediate layer 9.

The laminate in which the fuel electrode is sandwiched between the solid electrolyte layer 4 and the intermediate layer 9 may be produced by the following method. A fuel electrode precursor in which a binder is added to a slurry obtained by mixing a Ni or NiO powder and a stabilized zirconia powder with an organic solvent, and a solid electrolyte precursor in which a binder is added to a slurry obtained by mixing a stabilized zirconia powder with an organic solvent are prepared. The fuel electrode precursor may contain a poreforming material. A sheet powder compact obtained by sheet-forming using the solid electrolyte precursor is perforated to obtain a sheet powder compact for the intermediate layer. A sheet powder compact for the fuel electrode is formed on the surface of the sheet powder compact of the intermediate layer using the fuel electrode precursor. Further, a sheet powder compact for the solid electrolyte is formed on the surface of the sheet powder compact for the fuel electrode using the solid electrolyte precursor to obtain a laminated powder compact. The obtained laminated powder compact is fired to obtain a laminate of the intermediate layer 9, the fuel electrode, and the solid electrolyte layer 4. The fuel electrode having a large contraction factor is sandwiched between the intermediate layer 9 and the solid electrolyte layer 4 that have a relatively low contraction factor and sintered so that the obtained laminate has little warpage or deformation.

The base member and the laminate of the intermediate layer 9, the fuel electrode, that is, the first electrode layer 3, and the solid electrolyte layer 4 are bonded with an adhesive. As the adhesive, a paste is used containing at least one of the conductive particles of Ni, NiO, Cu, Co, and Zn, and as the inorganic oxide, at least one of oxides such as oxides of Ti, Zr, Al, Si, Mg, Ca, Sr, and Ba and rare earth oxides such as oxides of Y and Yb. The adhesive may contain not only one kind of conductive particles but also two or more kinds, and may contain not only one kind of inorganic oxide but also two or more kinds. Further, the inorganic oxide may be a composite oxide of two or more kinds of elements.

The adhesive is applied to the first surface 2a of the base member, and the first surface 2a of the base member to which the adhesive is applied is bonded to the surface of the intermediate layer 9 of the laminate. The bonded base member and the laminate are thermally treated in a nitrogen atmosphere or in the air, for example, in a range of 1000°C to 1200°C for 0.5 hours to 2 hours. In the obtained joint body of the base member and the laminate, since the warpage or deformation of the laminate is small, peeling or cracking is unlikely to occur in the laminate.

Note that in the above description, the intermediate layer 9, the fuel electrode, and the solid electrolyte layer 4 are sequentially sheet-formed to form a laminate. However, the sheet powder compact for the intermediate layer 9 and a laminate of the sheet powder compacts for the fuel electrode and the solid electrolyte layer 4 may be individually prepared, and the sheet powder compact for the intermediate layer 9 and the sheet powder compact for the fuel electrode of the laminate may be bonded together. In addition, the solid electrolyte layer 4 may be sheet-formed on one surface of the sheet powder compact for the fuel electrode, and the pattern of the intermediate layer 9 having the first through holes may be printed on another surface.

### Cell Stack Device

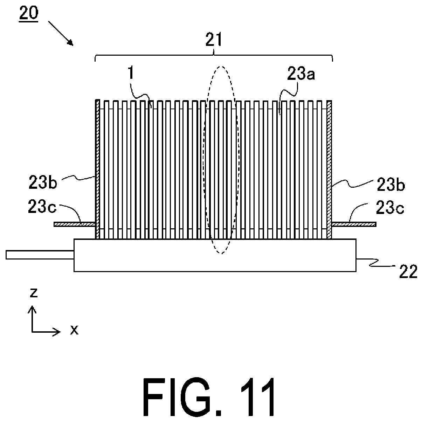

As illustrated in FIG. 11, a cell stack device 20 includes a cell stack 21 in which a plurality of cells 1 are disposed and a gas tank 22. A lower end portion of the cell 1 is bonded to and fixed to an opening portion of the gas tank 22. The gas tank 22 supplies fuel gas to the plurality of cells 1.

The cell stack 21 includes the plurality of cells 1 disposed or stacked in the thickness direction of the cells 1, and current collection members 23a that electrically connect adjacent ones of the cells 1 in series. The direction in which the plurality of cells 1 are disposed is referred to as an arrangement direction x.

The current collection members 23a may also be disposed on the two ends of the cell stack 21 in the arrangement direction x. The current collection members 23a may be bonded to the cells 1 with a conductive adhesive. As a material of the current collection members 23a, an elastic metal or alloy may be used, or felt made of metal fiber or alloy fiber may be used. The felt made of metal fiber or alloy fiber may be surface-treated as needed.

As illustrated in FIG. 11, the cell stack device 20 includes end current collection members 23b outside the cell stack 21 in the arrangement direction x. The end current collection members 23b are electrically connected to the cells 1 located on the outermost sides in the arrangement direction x. Each of the end current collection members 23b includes a lead-out portion 23c that protrudes outward in the arrangement direction x. The lead-out portions 23c collect the electricity generated in the cells 1 and draw out the collected electricity to the outside.

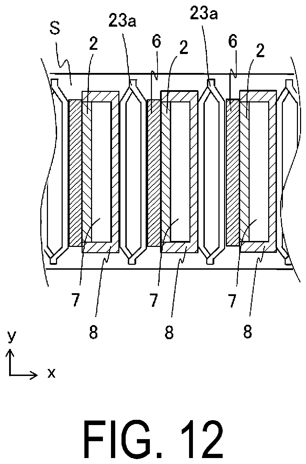

FIG. 12 is an enlarged horizontal cross-sectional view of a portion surrounded by a dashed line in FIG. 11. As illustrated in FIG. 12, the lower end portion of the cell 1 is fixed to the opening portion of the gas tank 22 with a sealing member S. The gas-flow passage 7 of the cell 1 leads to a fuel gas chamber (not illustrated) of the gas tank 22. A material of the sealing member S may be, for example, glass having excellent thermal resistance.

The lower end portions of the current collection members 23a and the end current collection members 23b may be fixed to the gas tank 22 with the sealing member S. The end current collection members 23b may be integrated with the cell stack 21.

### Module

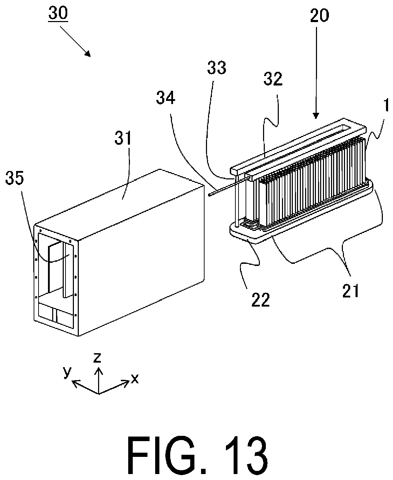

FIG. 13 is an exterior perspective view illustrating one example of a module including a cell stack device.

A module 30 includes a rectangular parallelepiped-shaped housing container 31 and the above-mentioned cell stack device 20 housed inside the housing container 31. A reformer 32 is disposed above the cell stack 21. The reformer 32 is connected to the gas tank 22 by a gas flow pipe 33. The reformer 32 reforms raw fuel such as natural gas or kerosene supplied via a raw fuel supply pipe 34 to produce fuel gas. The gas flow pipe 33 supplies the fuel gas reformed by the reformer 32 to the gas tank 22. The fuel gas is supplied from the gas tank 22 to the gas-flow passage 7 of the cell 1.

FIG. 13 illustrates a state in which a front surface portion and a rear surface portion, which are parts of the housing container 31, are removed, and the cell stack device 20 housed inside the housing container 31 is taken out rearward. In the module 30 illustrated in FIG. 13, the cell stack device 20 can be slid and housed in the housing container 31. The cell stack device 20 need not include the reformer 32.

The housing container 31 includes an oxygen-containing-gas inlet member 35 therein. The oxygen-containing-gas inlet member 35 in FIG. 13 is disposed between the two cell stacks 21 in a state in which the cell stack device 20 is housed in the housing container 31. The oxygen-containing-gas inlet member 35 supplies the oxygen-containing gas to the lower end portion of the cell 1. The oxygen-containing gas flows along the side of the cell 1 from the lower end portion to the upper end portion in synchronization with the flow of the fuel gas by the oxygen-containing-gas inlet member 35. The fuel gas discharged from the gas-flow passage 7 of the cell 1 to the upper end portion of the cell 1 is mixed with the oxygen-containing gas and burned. By burning the fuel gas discharged at the upper end portion of the cell 1, the temperature of the cell 1 rises, and the activation of the cell stack device 20 can be accelerated. In addition, by burning the fuel gas at the upper end portion of the cell 1, the reformer 32 disposed above the cell 1 is heated, and the reformer 32 can efficiently perform a reformation reaction.

### Module Housing Device

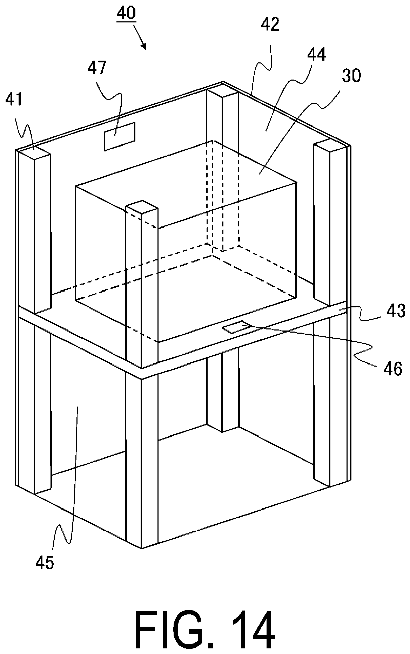

FIG. 14 is an exploded perspective view illustrating one example of a module housing device. Note that some configurations are omitted in FIG. 14. The module housing device includes an external case, a module housed in the external case, and an auxiliary device configured to operate the module and housed in the external case.

A module housing device 40 illustrated in FIG. 14 has supports 41 and exterior plates 42. A dividing plate 43 divides the inside of the external case into upper and lower spaces. A space above the dividing plate 43 in the external case is a module housing chamber 44 that houses the module 30, and a space below the dividing plate 43 in the external case is an auxiliary device housing chamber 45 that houses the auxiliary device for operating the module 30. Note that the description of the auxiliary device to be housed in the auxiliary device housing chamber 45 is omitted.

The dividing plate 43 has an air flow port 46 for allowing the air in the auxiliary device housing chamber 45 to flow into the module housing chamber 44. One of the exterior plates 42 forming the module housing chamber 44 has an exhaust hole 47 for exhausting the air in the module housing chamber 44. The air in the module housing chamber 44 is exhausted from the exhaust hole 47.

Since the module 30 described above is provided in the module housing chamber 44, the module housing device 40 can be made highly durable.

For example, in the cell stack device 20 described above, an example is illustrated in which the fuel gas is supplied to the gas-flow passage 7 in the cell 1 and the oxygen-containing gas is supplied to the outside of the cell 1. However, the oxygen-containing gas may be supplied to the gas-flow passage 7, and the fuel gas may be supplied to the outside of the cell 1.

Further, in the above description, the fuel cell, the fuel cell stack device, the fuel cell module, and the fuel cell device are respectively illustrated as one example of the "cell", the "cell stack device", the "module", and the "module housing device". However, in another example, the "cell", the "cell stack device", the "module", and the "module housing device" may be an electrolysis cell, an electrolysis cell stack device, an electrolysis module, and an electrolysis device, respectively.

### Reference Signs List

1 Cell
2 Metal plate
3 First electrode layer
4 Solid electrolyte layer
5 Second electrode layer
6 Element portion
7 Gas-flow passage
8 Flow path member
9 Intermediate layer
10 Conductive member
11 Second through hole
20 Cell stack device
21 Cell stack
22 Gas tank
33 Gas flow pipe
30 Module
31 Housing container
32 Reformer
40 Module housing device

## Claims

1. A cell (1) comprising:
a metal plate (2) comprising a pair of surfaces, which are a first surface (2a) and a second surface (2b) located on opposite side of the metal plate;
an element portion (6) disposed on the first surface (2a) and comprising a first electrode layer (3), a solid electrolyte layer (4) located on the first electrode layer (3), and a second electrode layer (5) located on the solid electrolyte layer (4); and
an intermediate layer (9) located between the first surface (2a) and the first electrode layer (3),
the intermediate layer (9) having a plurality of first through holes penetrating through the intermediate layer (9) in a thickness direction,
wherein the intermediate layer (9) has pores in addition to the plurality of first through holes, and
wherein a porosity of the intermediate layer (9) is smaller than a porosity of the first electrode layer (3) .

2. The cell (1) according to claim 1, wherein
a main component of the intermediate layer (9) is the same as a main component of the solid electrolyte layer (4).

3. The cell (1) according to claim 1 or 2, wherein
a conductive member (10) that electrically connects the metal plate (2) and the first electrode layer (3) is disposed in at least one of the plurality of first through holes.

4. The cell (1) according to claim 3, wherein
the conductive member (10) is porous.

5. The cell (1) according to claim 3 or 4, wherein
the conductive member (10) contains a conductive particle and an inorganic oxide.

6. The cell (1) according to any one of claims 3 to 5, wherein
the conductive member (10) is further disposed between the metal plate (2) and the intermediate layer (9) .

7. The cell (1) according to any one of claims 1 to 6, wherein
the metal plate (2) has a plurality of second through holes passing through the metal plate (2) in the thickness direction.

8. The cell (1) according to claim 7, wherein
at least one of the plurality of second through holes overlap with the plurality of first through holes in a plan view in the thickness direction.

9. The cell (1) according to claim 7, wherein
the plurality of second through holes do not overlap with the plurality of first through holes in a plan view in the thickness direction.

10. A cell stack device (20) comprising:
a cell stack (21) in which a plurality of the cells (1) according to any one of claims 1 to 9 are disposed.

11. A module (30) comprising:
a housing container (31); and
the cell stack device (20) according to claim 10 housed in the housing container (31).

12. A module housing device (40) comprising:
an external case;
the module (30) according to claim 11 housed in the external case; and
an auxiliary device housed in the external case, and configured to operate the module (30).

## Patentansprüche

1. Zelle (1), aufweisend:
eine Metallplatte (2), aufweisend ein Paar von Flächen, die eine erste Fläche (2a) und eine zweite Fläche (2b) sind, angeordnet auf gegenüberliegenden Seiten der Metallplatte,
einen Elementabschnitt (6), der auf der ersten Fläche (2a) angeordnet ist und eine erste Elektrodenschicht (3), eine auf der ersten Elektrodenschicht (3) angeordnete Festelektrolytschicht (4) und eine auf der Festelektrolytschicht (4) angeordnete zweite Elektrodenschicht (5) aufweist, und
eine Zwischenschicht (9), die zwischen der ersten Fläche (2a) und der ersten Elektrodenschicht (3) angeordnet ist,
wobei die Zwischenschicht (9) eine Mehrzahl von ersten Durchgangslöchern aufweist, die die Zwischenschicht (9) in einer Dickenrichtung durchdringen,
wobei die Zwischenschicht (9) zusätzlich zu der Mehrzahl von ersten Durchgangslöchern Poren hat, und
wobei eine Porosität der Zwischenschicht (9) kleiner als eine Porosität der ersten Elektrodenschicht (3) ist.

2. Zelle (1) gemäß Anspruch 1, wobei
eine Hauptkomponente der Zwischenschicht (9) die gleiche wie eine Hauptkomponente der Festelektrolytschicht (4) ist.

3. Zelle (1) gemäß Anspruch 1 oder 2, wobei
ein leitfähiges Element (10), das die Metallplatte (2) und die erste Elektrodenschicht (3) elektrisch verbindet, in mindestens einem aus der Mehrzahl von ersten Durchgangslöchern angeordnet ist.

4. Zelle (1) gemäß Anspruch 3, wobei
das leitfähige Element (10) porös ist.

5. Zelle (1) gemäß Anspruch 3 oder 4, wobei
das leitfähige Element (10) ein leitfähiges Partikel und ein anorganisches Oxid enthält.

6. Zelle (1) gemäß irgendeinem der Ansprüche 3 bis 5, wobei
das leitfähige Element (10) ferner zwischen der Metallplatte (2) und der Zwischenschicht (9) angeordnet ist.

7. Zelle (1) gemäß irgendeinem der Ansprüche 1 bis 6, wobei
die Metallplatte (2) eine Mehrzahl von zweiten Durchgangslöchern hat, die in der Dickenrichtung durch die Metallplatte (2) hindurchtreten.

8. Zelle (1) gemäß Anspruch 7, wobei
in einer Draufsicht in der Dickenrichtung mindestens eines aus der Mehrzahl von zweiten Durchgangslöchern mit der Mehrzahl von ersten Durchgangslöchern überlappt ist.

9. Zelle (1) gemäß Anspruch 7, wobei
in einer Draufsicht in der Dickenrichtung die Mehrzahl von zweiten Durchgangslöchern nicht mit der Mehrzahl von ersten Durchgangslöchern überlappt ist.

10. Zellenstapelvorrichtung (20), aufweisend:
einen Zellenstapel (21), in dem eine Mehrzahl der Zellen (1) gemäß irgendeinem der Ansprüche 1 bis 9 angeordnet ist.

11. Modul (30), aufweisend:
einen Gehäusebehälter (31) und
die Zellenstapelvorrichtung (20) gemäß Anspruch 10, die in dem Gehäusebehälter (31) untergebracht ist.

12. Modulgehäusevorrichtung (40), aufweisend:
ein externes Gehäuse,
das Modul (30) gemäß Anspruch 11, das in dem externen Gehäuse untergebracht ist, und
eine in dem externen Gehäuse untergebrachte Hilfsvorrichtung, die konfiguriert ist, um das Modul (30) zu betreiben.

## Revendications

1. Cellule (1), comprenant :
une plaque métallique (2) comprenant une paire de surfaces, qui sont une première surface (2a) et une deuxième surface (2b) situées sur des côtés opposés de la plaque métallique ;
une partie d'élément (6) disposée sur la première surface (2a) et comprenant une première couche d'électrode (3), une couche d'électrolyte solide (4) située sur la première couche d'électrode (3), et une deuxième couche d'électrode (5) située sur la couche d'électrolyte solide (4) ; et
une couche intermédiaire (9) située entre la première surface (2a) et la première couche d'électrode (3),
la couche intermédiaire (9) ayant une pluralité de premiers trous traversants pénétrant à travers la couche intermédiaire (9) dans une direction d'épaisseur,
dans laquelle la couche intermédiaire (9) présente des pores en plus de la pluralité de premiers trous traversants, et
dans laquelle une porosité de la couche intermédiaire (9) est inférieure à une porosité de la première couche d'électrode (3).

2. Cellule (1) selon la revendication 1, dans laquelle un composant principal de la couche intermédiaire (9) est le même qu'un composant principal de la couche d'électrolyte solide (4).

3. Cellule (1) selon la revendication 1 ou 2, dans laquelle
un élément conducteur (10) qui relie électriquement la plaque métallique (2) et la première couche d'électrode (3) est disposé dans au moins un de la pluralité de premiers trous traversants.

4. Cellule (1) selon la revendication 3, dans laquelle
l'élément conducteur (10) est poreux.

5. Cellule (1) selon la revendication 3 ou 4, dans laquelle
l'élément conducteur (10) contient une particule conductrice et un oxyde inorganique.

6. Cellule (1) selon l'une quelconque des revendications 3 à 5, dans laquelle
l'élément conducteur (10) est en outre disposé entre la plaque métallique (2) et la couche intermédiaire (9).

7. Cellule (1) selon l'une quelconque des revendications 1 à 6, dans laquelle
la plaque métallique (2) comporte une pluralité de deuxièmes trous traversants traversant la plaque métallique (2) dans la direction d'épaisseur.

8. Cellule (1) selon la revendication 7, dans laquelle
au moins un de la pluralité de deuxièmes trous traversants chevauche la pluralité de premiers trous traversants dans une vue en plan dans la direction d'épaisseur.

9. Cellule (1) selon la revendication 7, dans laquelle
la pluralité de deuxièmes trous traversants ne chevauchent pas la pluralité de premiers trous traversants dans une vue en plan dans la direction d'épaisseur.

10. Dispositif d'empilement de cellules (20), comprenant :
une pile de cellules (21) dans laquelle sont disposées une pluralité de cellules (1) selon l'une quelconque des revendications 1 à 9.

11. Module (30), comprenant :
un conteneur de logement (31) ; et
le dispositif d'empilement de cellules (20) selon la revendication 10 logé dans le conteneur de logement (31).

12. Dispositif de logement de module (40), comprenant :
un boîtier externe ;
le module (30) selon la revendication 11 logé dans le boîtier externe ; et
un dispositif auxiliaire logé dans le boîtier externe et configuré pour faire fonctionner le module (30).
